# EUROPEAN PATENT APPLICATION

(11) **EP 4 477 300 A1**
(43) Date of publication of application: **18.12.2024**
(21) Application number: 24178609.4
(22) Date of filing: 28.05.2024
(51) Int. Cl.: B01F 23/234, B01F 25/313, B01F 25/315, B01F 33/503, C02F 7/00

(54) **METHOD AND DEVICE FOR AERATING FLOWING WATER**

(30) Priority: 29.05.2023 PL 44503923; 12.04.2024 PL 44830324
(71) Applicant: Scibiorek, Andrzej, 01-187 Warszawa (PL)
(72) Inventor: Scibiorek, Andrzej, 01-187 Warszawa (PL)
(74) Representative: AOMB Polska Sp. z.o.o.

(57) **Abstract**

A method and a device for aerating flowing water, configured to float at least partially above the water surface, comprising a reducer (4), a main pipe (5) and at least two elongated, parallelly connected floats (1), between which there is a space for placing the reducer (4) and the main pipe (5). The first side of the floats (1) has curved surfaces forming a throat (3) in the form of a constrictor directly behind which the reducer (4) is placed. The throat (3) is configured to be at least partially below the water surface. The inlet of the main pipe (5) is fluidly connected to the outlet of the reducer (4), and the outlet of the main pipe (5) is directed upwards, configured to be above the water surface. The reducer (4) is fluidly connected to the throat (3) outlet. A flat plate (2) on which the floats (1) are mounted, comprising the lower plane of the throat (3). At least two aeration tubes (6), wherein the first end of the aeration tubes (6) is above the water surface and the second end of the aeration tubes (6) is inside the main pipe (5), wherein the second end is bent in the direction of water flow.

## Description

### Technical field

The subject of the invention is a method of aerating flowing water and a device For aerating flowing water. The device effectively aerates the surface or bottom layers of flowing water by mixing the water.

### Background of the disclosure

Aerators in which pumps with electric or combustion drives are used are known in the state of the art. Access to the river requires roads connection, and the unavailability of the electricity network requires the use of generators.

### Summary of the disclosure

According to the first aspect of the invention a device For aerating flowing water is provided. It is configured to float on its own at least partially above the surface of the water comprising:
- a reducer, wherein the reducer is fluidly connected to the throat outlet;
- a main pipe;
- at least two longitudinal, parallel floats, between which there is a space For placing the reducer and the main pipe. The floats have curved surfaces on the first side Forming a throat in the Form of a constrictor directly behind which the reducer is placed. The throat is configured to be at least partially under the water surface. The inlet of the main pipe is fluidly connected to the outlet of the reducer, and the outlet of the main pipe is directed upwards, configured to be above the water surface.
- a flat plate on which the floats are mounted, comprising the lower surface of the throat.
- at least two aeration tubes, wherein the first end of the aeration tubes is above the water surface and the second end of the aeration tubes is inside the main tube, which the second end is bent in the direction of water flow.

Preferably the device comprises a transporter fluidly connected with the outlet of the main pipe. The inlet of the transporter is directed upwards and extends upwards to a height of at least half a meter From the water surface and then comprises a downward bend after which it extends downward, configured to inject water below the water surface.

Preferably the device comprises a spiral flange inside the main pipe and/or the transporter.

Preferably the transporter is curved by 90 degrees.

Preferably the transporter additionally comprises a flexible hose fluidly connected to the transporter outlet.

Preferably the flexible hose comprises a weight attached to the end of the flexible hose.

Preferably the transporter is pivotally attached to the water aeration device and is configured to take a first position in which the transporter is fluidly connected with the outlet of the main pipe and take a second position in which the transporter is not fluidly connected with the outlet of the main pipe.

Preferably it comprises a filtering element in the Form of a comb or mesh located at the inlet of the throat, configured to prevent unwanted objects From entering the device.

Preferably at the outlet of the main pipe it comprises a device configured to convert the kinetic energy of water into electrical energy.

According to the second aspect of the invention a method of aerating flowing water using a device described previously characterized in that it comprises the following steps:
a. Placement of the device on the water surface so that at least part of the throat is below the water surface, wherein the throat is positioned against the current of the flowing water.
b. Injection of the flowing water into the throat inlet.
c. Injection of the water From the outlet of the throat into the inlet of the reducer. Disturbing the water flow by accelerating the velocity of water flow in the throat, resulting From the change in the cross-sectional area of the throat and the first mixing of air with water.
d. Injection of the water From the reducer outlet into the main pipe inlet.
e. air suction through the aeration pipes into the main pipe and additional mixing of water and air inside the main pipe.
f. discharge of water through the outlet of the main pipe.
g. introducing aerated water into flowing water.

Preferably after step F. there is an additional step of converting the kinetic energy of water into electrical energy using a generator.

### Brief description of the drawings

The disclosure will now be discussed with reference to the drawings, wherein:

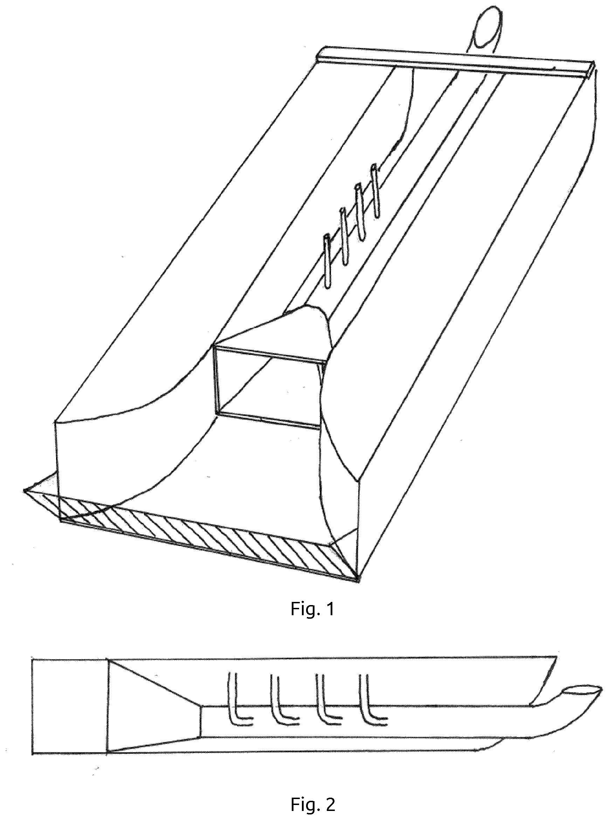

Fig. 1 illustrates an axonometric view of the device
Fig. 2 illustrates a cross-sectional view of the device

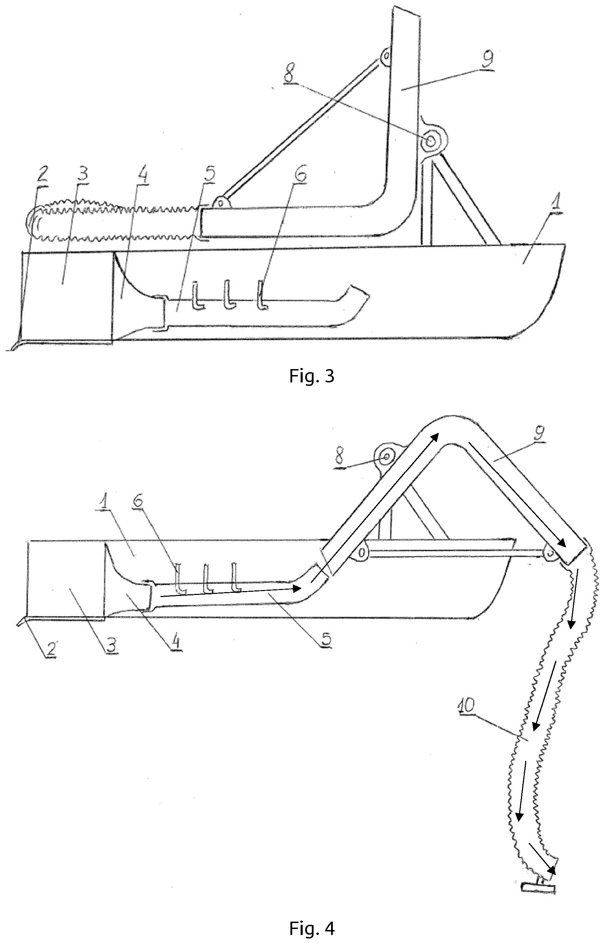

Fig. 3 illustrates a cross-sectional view of the device with the transporter in the disconnected position
Fig. 4 illustrates a cross-sectional view of the device with the transporter in the working position

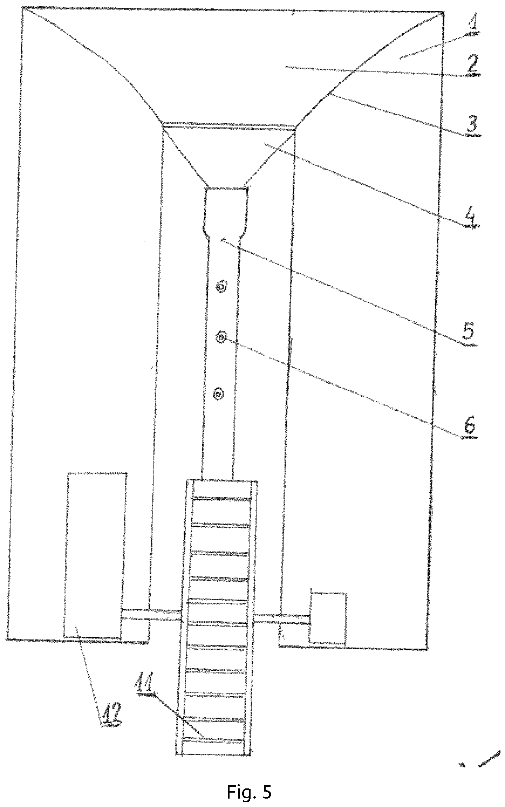

Fig. 5 illustrates a top view of the device with the generator and blades

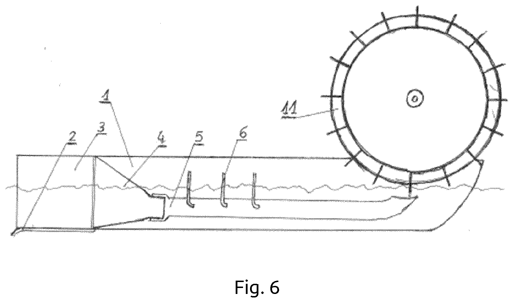

Fig. 6 illustrates a cross-sectional view of the device with a generator and blades

### Detailed description of the disclosure

According to the invention a method For aerating flowing water and a device For aerating water is provided, wherein device is intended For use in flowing water, For example in rivers. The device comprises at least two longitudinal floats 1, providing the device with buoyancy, placed parallel to each other at a given distance and mechanically connected to each other, For example by means of beams. Between the floats 1 there is provided space For placing the reducer4 and the main pipe 5. The sides of the floats 1 on the flowside are bent inwards, For example in the Form of ellipse, Forming the sides of the throat 3, such that the cross-sectional area at the inlet of the throat 3 is larger than the cross-sectional area at the outlet of the throat 3, Forming a constrictor. The lower plane of the throat 3 is Formed by a flat plate 2 on which the floats 1 are mounted.

The throat 3 located between the floats 1 is directed towards the flowing water during operation and is located at least partially under the water surface. During operation of the device, the throat 3 also increases the turbulence of the water flow, moving air particles into the interior of the reducer 4, causing aeration of the water. The planes of the floats 1 on the opposite to the throat 3 are bent elliptically down under the device, ensuring better stability on the water, and making it easier to tow the device when changing the working position. At the outlet of the throat 3, between the floats 1, there is a reducer 4, which is fluidly connected to the outlet of the throat 3. The reducer 4 can have any shape of the inlet and outlet surfaces, as long as the inlet surface is larger than the outlet surface. For example, the reducer4 may have inlet and outlet surfaces of a round, rectangular or polygonal shape. According to one embodiment, the inlet surface has a rectangular shape with a height equal to the height of the floats 1 and a width equal to the distance between the floats 1, and the outlet surface has a circular shape, smaller than the inlet surface. The outlet of the reducer 4 is Further Fluidly connected with the inlet of the main pipe 5, which inlet of the main pipe 5 has a shape preferably the same as the inlet of the reducer 4. The outlet of the main pipe 5 is directed upwards, preferably above the water surface, but in the case of a sufficiently strong flow of water through main pipe 5, the outlet of the main pipe 5 may be located below the water surface. In a device that is stationed in places of Flowing water where the current is too slow, the main pipe 5 should be replaced with another one with a smaller diameter. The greater constriction From the reducer 4 to the main pipe 5 also causes the hydraulic drop to be greater, increasing the efficiency of the device.

From the outlet surface of the reducer 4, between the Floats 1, to the end of the length of the Floats 1, a replaceable main pipe 5 is attached, in which at least two aeration tubes 6 can be attached From above, preferably Four aeration tubes 6. The first ends aeration tubes 6 are located above the water surface. The second ends of the aeration tubes 6 located inside the main pipe 5 are preferably bent in the direction of water Flow in the main pipe 5. The water Flowing around the bent ends of the aeration tubes 6, together with the hydraulic drop From the reducer 4, creates a negative pressure that sucks air From the aeration tubes 6 into the pipe main pipe 5. The outlet of the main pipe 5 is directed upwards so that during operation of the device, the outlet of the main pipe 5 preferably protrudes above the water surface, allowing water to be released above the water surface. The main pipe 5 can be replaced with another pipe of a different diameter, the diameter of the main pipe 5 is adjusted to the speed of the waterstream in a given place in order to obtain an optimal and eFFective hydraulic drop.

Additionally, it is possible to attach the filter element 7 to the edge of the plate 2 From the throat side, in the Form of a net or a comb. The filter element 7 prevents unwanted objects Floating on the water surface, such as garbage or vegetation, From entering the device, protecting the device against clogging.

According to another aspect of the invention, water is Forced into the throat 3 of a device For aerating Flowing water through a water current, e.g. a river current. Injecting water From the outlet of the throat 3 into the inlet of the reducer 4, disturbing the water Flow by accelerating the speed of water Flow in the throat 3, resulting From the change in the cross-sectional area of the throat 3, causes the first mixing of air and water. Inside the main pipe 5, there is an accumulation of the energy of the Flowing water and its acceleration until a sufficient hydraulic drop is achieved; the decrease in water pressure in the main pipe 5 causes air to be sucked inside. The water then accelerates and carries away air particles, passing through the reducer 4 to the main pipe 5. Inside the main pipe 5, through aeration tubes 6, the water is mixed with air For the second time. The curvature of the aeration tubes 6 inside the main pipe 5 in the direction of water Flow, which sucks in air, supports the aeration process. The outlet of the main pipe 5, curved upwards, throws water above the water surface, which falls and mixes with the air For the third time, completing the aeration process and mixing with the water reservoir.

Aeration of water in the main pipe 5 through aeration tubes 6 uses a phenomenon known From hydrodynamics called hydraulic fall. Water flowing From the larger cross-section to the smaller cross-section of the pipe increases its speed and simultaneously reduces the pressure. This principle is used in the construction of atomizers, injectors, or burners. According to a second alternative embodiment, the water aeration device may include an additional transporter 9. The transporter 9 is fluidly connected to the outlet of the main pipe 5. The inlet of the transporter 9 is directed upwards and extends upwards to a height of at least half a meter From the water surface, preferably to a height of a meter and then includes a downward bend and extends downwards so that the outlet of the transporter 9 is preferably below the water surface. The transporter 9 is mounted separately and allows water to be moved directly to the bottom of the flowing water, which allows For effective aeration of the bottom layers of water, which usually have a lower aeration coefficient compared to the water on the surface of the water reservoir. Above the end of the main pipe 5, which is curved upwards, the inlet of the transporter 9 is placed in the same slant line as the outlet of the main pipe 5.

The transporter 9 comprises a pipe which extends at least half a meter upwards along the axis of the pipe, and preferably one meter upwards. In the central part, the transporter 9 is curved at an angle of 30 to 120 degrees, preferably at an angle of 90 degrees. The transporter 9 can be conveniently attached to the water aeration device, preferably in the middle section of the transporter 9 pipe, by means of a mount 8. The transporter 9 can be attached, For example, pivotally by means of a mount 8 placed between the floats 1, which allows the operating mode of the water aeration device to be changed: occupying the first position when the transporter 9 is fluidly connected to the outlet of the main pipe 5 and the second position when the transporter 9 is not fluidly connected to the outlet of the main pipe 5, i.e. between the mode of releasing water into the air and the mode of aerating the water bottom. The outlet of the water transporter 9 rests on a beam mounted between the floats 1, positioning the inlet of the transporter 9 placed above the outlet of the main pipe 5. The diameter of the transporter 9 pipe is larger than the diameter of the main pipe 5 running From the reducer 4.

A flow-reinforced flexible hose 10 is preferably attached to the second outlet of the transporter 9, which is placed down during aeration so that outlet of the flexible hose 10, preferably equipped with a weight, is located near the bottom of the river. Water thrown out From the outlet hole of the main pipe 5 falls into the inlet hole of the transporter 9 and hits the inner surface of the bend of the transporter 9 pipe and the surface of the water in the transporter 9 pipe, mixing with the air For the third time. If a flexible hose 10 is used, aerated water flows down to the bottom with a flexible hose 10 attached to the outlet of the transporter 9 pipe. The transporter 9 pipe is filled Faster than the river flow speed, which is why the water level in the transporter 9 pipe is higher than the water level in the river. In order to equalize the levels, water is pushed From the transporter 9 pipe to the bottom of the river. In the working position, the inlet of the transporter 9 is located above the outlet of the main pipe 5 of the reducer 4. It captures the water stream inside the transporter 9. When moving the device or when there is a need For surface aeration of a shallow river, the transporter 9 can be removed or, in the case of using pivotal mount 8, it is rotated on the, so that the transporter9 is no longer connected to the main pipe 5.

According to the invention, it is advantageous to attach a spiral flange to the inner wall of the main pipe 5 and or the transporter9 pipe, preventing the formation of an air areas in the pipe. The spiral flange additionally increases the mixing of air and water.

Additionally, the device For aerating the flowing water at the pipe outlet may include a device For converting the kinetic energy of water into electrical energy, For example an electric generator 12 connected to blades 11 working with the released water From the main pipe 5 outlet.

The transporter 9 configured to move aerated water to the bottom of the river is mounted in the middle between the floats 1 at the opposite end of the device From the throat 3. The transporter 9 is suspended on a structure with a mount 8 which is located above the upper plane of the floats 1. The inlet of the transporter 9 pipe in the working position is located above the outlet of the end of the main pipe 5, bent upwards, mounted separately on the reducer 4. It is stabilized in this position by a support profile transversely attached to the floats 1, on which the main pipe 5 rests, attached to the device. The diameter of the transporter 9 pipe is larger than the diameter of the outlet of the main pipe 5 in order to capture all the water ejected From the outlet of the main pipe 5. The first section of the transporter 9 pipe is located substantially in the same line as the upwardly bent outlet of the main pipe 5 and is attached to mount 8 in the Form of a hinge. Above the mount 8, the transporter 9 pipe is bent at an angle of 90 degrees and runs diagonally down to the water surface. A flexible hose 10 is attached separately to the outlet of the transporter 9 pipe. The flexible hose 10 runs down to the bottom of the river, where it rests loaded with a weight. Water falling through the inlet of the transporter 9 pipe hits the inner wall and the water surface in the transporter 9 at the bend, mixing with the air For the third time. When moving the device or when water levels are low in the water tank, the transporter 9 is rotated on the mount 8 to a position such that the outlet part of the flexible hose 10 of the transporter 9 lies on the transverse beams connecting both floats 1 and the inlet part is directed upwards. The advantage of the device and the method according to the invention is its simple design and the ability to work 24 hours a day without the need of electric or combustion engines. The passive operation of the device without the need to burn fossil fuels ensures a significant reduction in operating costs and reduction of greenhouse gas emissions and other pollutants generated during the combustion process. In addition to aerating the river, the device cleans it due to the supplied oxygen, oxidizing toxic substances, making them less harmful. The device also removes C02 by raising the Ph of water, while gas exchange also enables the removal of hydrogen sulfide and methane.

### List of reference numerals

- 1 -: float
- 2 -: plate
- 3 -: throat
- 4-: reducer
- 5-: main pipe
- 6 -: aeration tube
- 7 -: filtering element
- 8 -: mount
- 9 -: transporter
- 10 -: flexible hose
- 11 -: blades
- 12 -: generator

## Claims

1. A device For aerating Flowing water configured to Float on its own at least partially above the surface of the water, comprising:
a reducer (4);
a main pipe (5);
at least two longitudinal, parallel Floats (1), between which there is a space For placing the reducer (4) and the main pipe (5), wherein the Floats (1) have curved surfaces on the first side Forming a throat (3) in the Form of a constrictor directly behind which the reducer (4) is placed, wherein the throat (3) is configured to be at least partially under the water surface and wherein the inlet of the main pipe (5) is Fluidly connected to the outlet of the reducer (4), and wherein the outlet of the main pipe (5) is directed upwards, configured to be above the water surface;
wherein the reducer (4) is Fluidly connected to the throat (3) outlet;
a Flat plate (2) on which the Floats (1) are mounted, comprising the lower surface of the throat (3);
at least two aeration tubes (6), wherein the first end of the aeration tubes (6) is above the water surface and the second end of the aeration tubes (6) is inside the main tube (5), which the second end is bent in the direction of water Flow.

2. The device according to claim 1, **characterized in that** it comprises a transporter (9) Fluidly connected with the outlet of the main pipe (5), wherein the inlet of the transporter (9) is directed upwards and extends upwards to a height of at least halF a meter From the water surface and then comprises a downward bend after which it extends downward, configured to inject water below the water surface.

3. The device according to claim 1 or2, **characterized in that** it comprises a spiral Flange inside the main pipe (5) and/or the transporter (9).

4. The device according to claim 1, 2 or 3, **characterized in that** the transporter (9) is curved by 90 degrees.

5. The device according to any one of claims. 1-4, **characterized in that** the transporter (9) additionally contains a Flexible hose (10) Fluidly connected to the transporter (9) outlet.

6. The device according to claim 5, **characterized in that** the Flexible hose (10) comprises a weight attached to the end of the Flexible hose (10).

7. The device according to any one of claims. 1-6, **characterized in that** the transporter (9) is pivotally attached to the water aeration device and is configured to take a first position in which the transporter (9) is Fluidly connected with the outlet of the main pipe (5) and take a second position in which the transporter is not Fluidly connected with the outlet of the main pipe (5).

8. The device according to any one of claims. 1-7, **characterized in that** it comprises a filtering element (7) in the Form of a comb or mesh located at the inlet of the throat (3), configured to prevent unwanted objects From entering the device.

9. The device according to any one of claims. 1-8, **characterized in that** at the outlet of the main pipe (5) it comprises a device configured to convert the kinetic energy of water into electrical energy.

10. A method of aerating flowing water using a device according to any of the claims. 1-9 **characterized in that** it comprises the following steps:
a. placement of the device according to claim 1-9 on the water surface so that at least part of the throat (3) is below the water surface, wherein the throat (3) is positioned against the current of the flowing water.
b. injection of the flowing water into the throat (3) inlet.
c. injection of the water From the outlet of the throat (3) into the inlet of the reducer (4), disturbing the water flow by accelerating the velocity of water flow in the throat (3), resulting From the change in the cross-sectional area of the throat (3) and the first mixing of air with water.
d. injection of the water From the reducer outlet (4) into the main pipe inlet (5).
e. airsuction through the aeration tubes (6) into the main pipe (5) and additional mixing of water and air inside the main pipe (5).
f. discharge of water through the outlet of the main pipe (5).
g. introducing aerated water into flowing water.

11. Water aeration method according to claim. 10, **characterized in that** after step f. there is an additional step of converting the kinetic energy of water into electrical energy using a generator (12)
